(19) Europäisches Patentamt
European Patent Office
Office européen des brevets

(11) EP 4 336 617 B1

(12) EUROPEAN PATENT SPECIFICATION

(45) Date of publication and mention of the grant of the patent:
**20.05.2026 Bulletin 2026/21**

(21) Application number: **22901718.1**

(22) Date of filing: **29.11.2022**

(51) International Patent Classification (IPC):
***H01M 10/0567*** *(2010.01)* ***H01M 10/052*** *(2010.01)*
***H01M 10/0525*** *(2010.01)*

(52) Cooperative Patent Classification (CPC):
**H01M 10/052; H01M 10/0525; H01M 10/0567;**
H01M 2300/0025; H01M 2300/0042; Y02E 60/10

(86) International application number:
**PCT/KR2022/019054**

(87) International publication number:
**WO 2023/101360 (08.06.2023 Gazette 2023/23)**

# (54) NON-AQUEOUS ELECTROLYTE FOR LITHIUM SECONDARY BATTERY, AND LITHIUM SECONDARY BATTERY COMPRISING SAME

WASSERFREIER ELEKTROLYT FÜR LITHIUMSEKUNDÄRBATTERIE UND LITHIUMSEKUNDÄRBATTERIE DAMIT

ÉLECTROLYTE NON AQUEUX POUR BATTERIE SECONDAIRE AU LITHIUM, ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.12.2021 KR 20210169690**
**28.11.2022 KR 20220161914**

(43) Date of publication of application:
**13.03.2024 Bulletin 2024/11**

(73) Proprietor: **LG Energy Solution, Ltd.**
**Seoul 07335 (KR)**

(72) Inventors:
- **HAN, Jung Gu**
  **Daejeon 34122 (KR)**
- **LEE, Kyung Mi**
  **Daejeon 34122 (KR)**
- **LEE, Jung Min**
  **Daejeon 34122 (KR)**
- **YEOM, Chul Eun**
  **Daejeon 34122 (KR)**
- **LEE, Chul Haeng**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:

| | |
|---|---|
| **CN-A- 102 569 889** | **CN-A- 102 569 889** |
| **JP-A- 2000 156 243** | **JP-A- 2006 318 760** |
| **JP-A- H1 050 344** | **JP-A- H1 050 344** |
| **KR-A- 20210 060 330** | **KR-A- 20210 060 330** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

Cross-reference to Related Applications

This application claims priority from Korean Patent Application Nos. 10-2021-0169690, filed on December 1, 2021, and 10-2022-0161914, filed on November 28, 2022.

Technical Field

The present disclosure relates to a non-aqueous electrolyte solution for a lithium secondary battery and a lithium secondary battery including the same.

## BACKGROUND ART

As dependence on electrical energy is gradually increasing in modern society, a renewable energy power generation system capable of producing electrical energy without causing environmental problems is in the spotlight.

A lithium-ion battery is known as a device exhibiting the highest energy density while stably supplying power among currently commercialized power storage devices.

The lithium-ion battery is composed of a positive electrode formed of a transition metal oxide containing lithium, a negative electrode capable of storing the lithium, an electrolyte solution that includes an organic solvent containing a lithium salt, and a separator. With respect to the positive electrode among them, energy is stored through a redox reaction of transition metal, wherein this results in the fact that the transition metal must be essentially included in a positive electrode material.

If the lithium-ion battery is exposed to repeated charge and discharge and a high-temperature environment, gas generation in the cell is caused while electrolyte decomposition is intensified. Particularly, with respect to a positive electrode for high voltage which is recently used in the lithium-ion battery, a reactive oxygen compound is formed above a certain voltage, wherein this reactive oxygen compound causes decomposition of a carbonate-based solvent, as a main solvent in the electrolyte, to further intensify the gas generation.

When the electrolyte is depleted by these various side reactions, battery performance may be significantly degraded while a sudden death phenomenon occurs in which battery capacity suddenly drops.

Furthermore, since the lithium salt used as an electrolyte salt is vulnerable to moisture, it reacts with moisture present in the cell to generate a Lewis acid such as HF. This Lewis acid erodes a passivation film formed at an electrode-electrolyte interface and may cause dissolution of transition metal ions from the positive electrode, wherein the dissolved transition metal ions are electro-deposited on a surface of the negative electrode to promote the electrolyte decomposition and deintercalate lithium ions intercalated into the negative electrode, and thus, a battery capacity retention may be significantly reduced.

KR 20210060330 A discloses a non-aqueous electrolyte for lithium secondary batteries comprising an additive comprising a coumarin-derivative.

Thus, in order to prevent these various side reactions, there is a need to develop a novel electrolyte capable of forming a stable film on the surface of the electrode.

## DISCLOSURE OF THE INVENTION

## TECHNICAL PROBLEM

An aspect of the present disclosure provides a non-aqueous electrolyte solution for a lithium secondary battery which includes an additive forming a stable film on a surface of an electrode and simultaneously having an excellent effect of scavenging a highly reactive Lewis acid, acidic materials, and reactive oxygen species in an electrolyte solution.

Another aspect of the present disclosure provides a lithium secondary battery in which high-rate charge and discharge characteristics are improved by including the above non-aqueous electrolyte solution for a lithium secondary battery.

## TECHNICAL SOLUTION

In an embodiment of the present disclosure,

there is provided a non-aqueous electrolyte solution for a lithium secondary battery which includes a lithium salt, an organic

solvent, and a compound represented by Formula 1 as an additive.

[Formula 1]

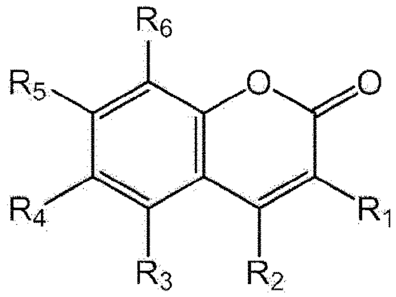

In Formula 1,

$R_1$ to $R_6$ are each independently hydrogen, an alkyl group having 1 to 5 carbon atoms, $-SiR_7R_8R_9$ ($R_7$ to $R_9$ are each independently an alkyl group having 1 to 10 carbon atoms), or $-O-SiR_{10}R_{11}R_{12}$ ($R_{10}$ to $R_{12}$ are each independently an alkyl group having 1 to 10 carbon atoms),
wherein at least one of $R_1$ to $R_5$ is $-SiR_7R_8R_9$ ($R_7$ to $R_9$ are each independently an alkyl group having 1 to 10 carbon atoms) or $-O-SiR_{10}R_{11}R_{12}$ ($R_{10}$ to $R_{12}$ are each independently an alkyl group having 1 to 10 carbon atoms).

In another embodiment of the present disclosure,
there is provided a lithium secondary battery including a negative electrode, a positive electrode, a separator disposed between the negative electrode and the positive electrode, and a non-aqueous electrolyte solution, wherein the non-aqueous electrolyte solution includes the non-aqueous electrolyte solution for a lithium secondary battery of the present disclosure.

## ADVANTAGEOUS EFFECTS

Since a non-aqueous electrolyte solution of the present disclosure includes a coumarin derivative substituted with a trialkylsilyl group or a trialkylsilyl ether group as an additive, it may not only effectively scavenge a Lewis acid generated as an electrolyte decomposition product, but may also form a stable film on a surface of an electrode, and thus, a continuous decomposition reaction between a positive electrode and an organic solvent may be suppressed. Accordingly, if such a non-aqueous electrolyte solution is included, a lithium secondary battery with improved high-rate charge and discharge characteristics may be achieved.

## MODE FOR CARRYING OUT THE INVENTION

Hereinafter, the present disclosure will be described in more detail.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

Conventionally, transition metals, which constitute a positive electrode, are easily dissolved into an electrolyte solution, due to a decomposition product, for example, hydrofluoric acid (HF) that is formed by hydrolysis/thermal decomposition of a lithium salt becoming a film on a surface of an electrode, and dissolved transition metal ions are re-deposited on the positive electrode to be a cause of increasing resistance of the positive electrode. Also, since the transition metals moved to a negative electrode through the electrolyte solution are electro-deposited on the negative electrode to self-discharge the negative electrode and destruct a solid electrolyte interphase (SEI) film that gives passivation ability to the negative electrode, interfacial resistance of the negative electrode is increased by promoting an additional electrolyte solution decomposition reaction.

Since this series of reactions reduces an amount of available lithium ions in a battery, it not only leads to the degradation of capacity of the battery, but the decomposition reaction of the electrolyte solution is also accompanied, and thus, resistance is also increased.

The present disclosure aims to provide a non-aqueous electrolyte solution for a lithium secondary battery, which

may form a robust film on a surface of the positive electrode through oxidative decomposition before an organic solvent by including an additive capable of effectively scavenging a decomposition product of an electrolyte salt which becomes a cause of the degradation and failure behavior, and a lithium secondary battery in which high-rate charge and discharge at high temperature are improved by including the same.

**Non-aqueous Electrolyte Solution for Lithium Secondary Battery**

Specifically, in an embodiment of the present disclosure,
provided is a non-aqueous electrolyte solution for a lithium secondary battery which includes a lithium salt, an organic solvent, and a compound represented by Formula 1 below as an additive.

[Formula 1]

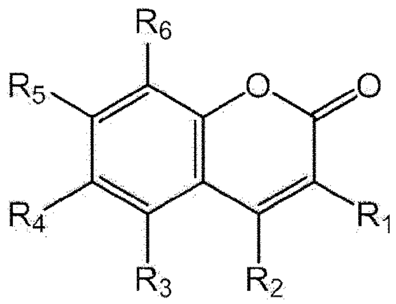

In Formula 1,

$R_1$ to $R_6$ are each independently hydrogen, an alkyl group having 1 to 5 carbon atoms, $-SiR_7R_8R_9$ ($R_7$ to $R_9$ are each independently an alkyl group having 1 to 10 carbon atoms), or $-O-SiR_{10}R_{11}R_{12}$ ($R_{10}$ to $R_{12}$ are each independently an alkyl group having 1 to 10 carbon atoms),
wherein at least one of $R_1$ to $R_5$ is $-SiR_7R_8R_9$ ($R_7$ to $R_9$ are each independently an alkyl group having 1 to 10 carbon atoms) or $-O-SiR_{10}R_{11}R_{12}$ ($R_{10}$ to $R_{12}$ are each independently an alkyl group having 1 to 10 carbon atoms).

**(1) Lithium Salt**

First, the lithium salt will be described as follows.

Any lithium salt typically used in a non-aqueous electrolyte solution for a lithium secondary battery may be used as the lithium salt without limitation, and, for example, the lithium salt may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}$ , $AlCl_4^-$, $AlO_4^-$, $PF_6^-$, $CF_3SO_3^-$, $CH_3CO_2^-$, $CF_3CO_2^-$, $ASF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$ as an anion.

Specifically, the lithium salt may include a single material selected from the group consisting of LiCl, LiBr, LiI, $LiBF_4$, $LiClO_4$, $LiB_{10}Cl_{10}$, $LiAlCl_4$, $LiAlO_4$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (Lithium bis(fluorosulfonyl)imide, LiFSI), $LiN(SO_2CF_2CF_3)_2$ (lithium bis(pentafluoroethanesulfonyl)imide, LiBETI), and $LiN(SO_2CF_3)_2$ (lithium bis(trifluoromethanesulfonyl)imide, LiTFSI) or a mixture of two or more thereof, and a lithium salt typically used in an electrolyte solution of a lithium secondary battery may be used without limitation in addition to the above-described lithium salt. Specifically, the lithium salt may include at least one selected from $LiPF_6$, $LiBF_4$, and $LiN(SO_2F)_2$.

The lithium salt may be appropriately changed in a normally usable range, but may be included in a concentration of 0.8 M to 3.0 M, specifically, 1.0 M to 3.0 M in the electrolyte solution to obtain an optimum effect of forming a film for preventing corrosion of the surface of the electrode. In a case in which the concentration of the lithium salt satisfies the above range, viscosity of the non-aqueous electrolyte solution may be controlled to achieve optimal impregnability, and mobility of lithium ions may be improved to obtain an effect of improving capacity characteristics and cycle characteristics of the lithium secondary battery.

**(2) Non-aqueous Organic Solvent**

Also, a description of the non-aqueous organic solvent is as follows.

Various organic solvents typically used in a non-aqueous electrolyte solution may be used as the non-aqueous organic solvent without limitation, wherein a type thereof is not limited as long as decomposition due to an oxidation reaction during charge and discharge of the secondary battery may be minimized and desired properties may be exhibited together with an additive.

Specifically, the non-aqueous organic solvent may include a cyclic carbonate-based organic solvent, a linear carbonate-based organic solvent, a linear ester-based organic solvent, or a mixed organic solvent thereof.

The cyclic carbonate-based organic solvent is a highly viscous organic solvent which well dissociates the lithium salt in the non-aqueous electrolyte solution due to high permittivity, wherein specific examples of the cyclic carbonate-based organic solvent may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include ethylene carbonate.

The linear carbonate-based organic solvent is an organic solvent having low viscosity and low permittivity, wherein specific examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

The linear ester-based organic solvent is a solvent having relatively higher stability during high-temperature and high-voltage operation than the cyclic carbonate-based organic solvent, wherein it may improve disadvantages of the cyclic carbonate-based organic solvent causing gas generation during high-voltage operation and may simultaneously achieve high ionic conductivity. As a specific example, the linear ester-based organic solvent may include at least one selected from the group consisting of methyl acetate, ethyl acetate, propyl acetate, methyl propionate, ethyl propionate, propyl propionate, and butyl propionate, and may specifically include at least one selected from ethyl propionate and propyl propionate.

In the present disclosure, in order to ensure high ionic conductivity of the non-aqueous electrolyte solution, the cyclic carbonate-based organic solvent and at least one of the linear carbonate-based organic solvent and the linear ester-based organic solvent may be used by being mixed in a volume ratio of 10:90 to 50:50, specifically, 20:80 to 40:60.

Furthermore, the non-aqueous electrolyte solution of the present disclosure may additionally include a cyclic ester-based organic solvent, if necessary. Also, the cyclic ester-based organic solvent may include at least one selected from the group consisting of γ-butyrolactone, γ-valerolactone, γ-caprolactone, σ-valerolactone, and ε-caprolactone.

A remainder excluding the lithium salt and the compound represented by Formula 1 as an additive in the non-aqueous electrolyte solution of the present disclosure may all be the non-aqueous organic solvent unless otherwise stated.

(3) Additive

The non-aqueous electrolyte solution for a lithium secondary battery of the present disclosure includes a compound represented by Formula 1 below as an additive.

[Formula 1]

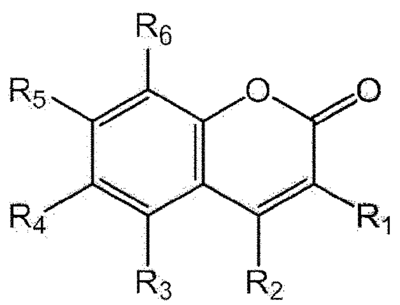

In Formula 1,

$R_1$ to $R_6$ are each independently hydrogen, an alkyl group having 1 to 5 carbon atoms, $-SiR_7R_8R_9$ ($R_7$ to $R_9$ are each independently an alkyl group having 1 to 10 carbon atoms), or $-O-SiR_{10}R_{11}R_{12}$ ($R_{10}$ to $R_{12}$ are each independently an alkyl group having 1 to 10 carbon atoms),
wherein at least one of $R_1$ to $R_5$ is $-SiR_7R_8R_9$ ($R_7$ to $R_9$ are each independently an alkyl group having 1 to 10 carbon atoms) or $-O-SiR_{10}R_{11}R_{12}$ ($R_{10}$ to $R_{12}$ are each independently an alkyl group having 1 to 10 carbon atoms).

Specifically, $R_7$ to $R_{12}$ in Formula 1 may each independently include a primary, secondary, or tertiary alkyl group having 1 to 10 carbon atoms which is unsubstituted or substituted with an alkyl group, and may be the same or different from each other.

The compound represented by Formula 1, as the additive of the present disclosure, is an aromatic coumarin derivative, wherein it may effectively suppress generation of adversely affecting $CO_2$, CO, or $H_2O$ in the battery by scavenging reactive oxygen compounds (Singlet oxygen, Superoxide radical anion) that may be generated from a high-voltage/high-capacity positive electrode such as a high-manganese (Mn-rich) positive electrode, an overlithiated layered oxide, or a ternary positive electrode having a nickel concentration of 0.6 or more ($LiNi_xCo_yMn_zO_2$ ($0.6<x\leq0.92$, $0<y\leq1.0$, $0<z\leq1.0$)). Also, since a functional group, such as a trialkylsilyl group and a trialkylsilyl ether group, substituted in the aromatic coumarin derivative of the present disclosure reacts with HF generated as an electrolyte decomposition product to form fluorotrialkylsilylsilane, HF or acidic materials may be effectively scavenged. Particularly, with respect to the trialkylsilyl ether group, since it effectively inhibits chemical decomposition and hydrolysis by stabilizing a Lewis acid, such as $PF_5$, through a Lewis acid-base interaction, it may suppress the generation of HF and reactive acidic compounds which may be generated by Lewis acid decomposition. Thus, since it may effectively scavenge the reactive acidic compounds, such as a Lewis acid, in comparison to a compound in which a halogen group is directly substituted into an aromatic coumarin compound or a hydrocarbon-based halogen functional group is substituted, a side reaction caused by the reactive acidic compounds and an electrode-electrolyte solution interface degradation reaction may be effectively controlled.

Furthermore, the additive is oxidatively decomposed before the organic solvent to form a robust film on the surfaces of the positive electrode and the negative electrode, and this film may suppress a continuous decomposition reaction between the positive electrode and the organic solvent. Thus, a lithium secondary battery having improved high-rate charge and discharge may be achieved by including the non-aqueous electrolyte solution including the additive.

Specifically, in Formula 1, $R_1$ to $R_6$ may each independently be hydrogen, $-SiR_7R_8R_9$ ($R_7$ to $R_9$ are each independently an alkyl group having 1 to 7 carbon atoms), or $-O-SiR_{10}R_{11}R_{12}$ ($R_{10}$ to $R_{12}$ are each independently an alkyl group having 1 to 7 carbon atoms), wherein at least one of $R_1$ or $R_5$ may be $-SiR_7R_8R_9$ ($R_7$ to $R_9$ are each independently an alkyl group having 1 to 7 carbon atoms) or $-O-SiR_{10}R_{11}R_{12}$ ($R_{10}$ to $R_{12}$ are each independently an alkyl group having 1 to 7 carbon atoms), and $R_2$ to $R_4$ and $R_6$ may each independently be hydrogen or an alkyl group having 1 to 7 carbon atoms.

Also, in Formula 1, $R_1$ to $R_6$ may each independently be hydrogen, $-SiR_7R_8R_9$ ($R_7$ to $R_9$ are each independently an alkyl group having 1 to 5 carbon atoms), or $-O-SiR_{10}R_{11}R_{12}$ ($R_{10}$ to $R_{12}$ are each independently an alkyl group having 1 to 5 carbon atoms), wherein at least one of $R_1$ or $R_5$ may be $-SiR_7R_8R_9$ ($R_7$ to $R_9$ are each independently an alkyl group having 1 to 5 carbon atoms) or $-O-SiR_{10}R_{11}R_{12}$ ($R_{10}$ to $R_{12}$ are each independently an alkyl group having 1 to 5 carbon atoms), and $R_2$ to $R_4$ and $R_6$ may each independently be hydrogen or an alkyl group having 1 to 5 carbon atoms.

Specifically, the compound represented by Formula 1 may include at least one selected from compounds represented by Formulae 1a and 1b.

[Formula 1a]

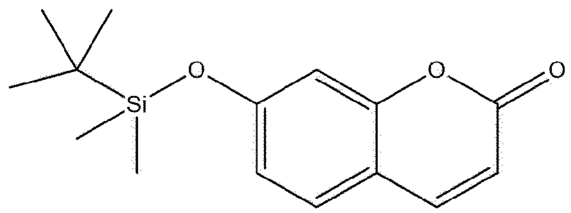

7-[tert-butyl(dimethyl)silyl]oxychromen-2-one (CAS No. 918314-89-3)

[Formula 1b]

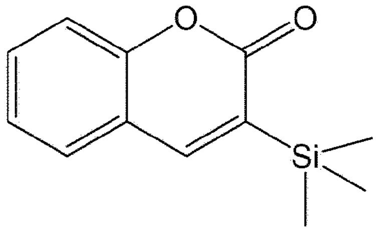

3-(Trimethylsilyl)courmarin (CAS No. 647836-33-7)

The compound represented by Formula 1 may be present in an amount of 0.01 wt% to 5.0 wt% based on a total weight of the non-aqueous electrolyte solution.

If the compound represented by Formula 1 is present in the above range, the compound may effectively scavenge the decomposition product of the electrolyte salt and may simultaneously form a robust passivation film on the surface of the electrode while maximally suppressing disadvantages such as a side reaction caused by the additive, a decrease in initial capacity, and an increase in resistance. Thus, a secondary battery with more improved overall performance may be prepared.

Specifically, in a case in which the amount of the compound represented by Formula 1 is 0.01 wt% or more, a stable film is formed, and an effect of scavenging the Lewis acid generated as an electrolyte decomposition product during battery operation may be more stably maintained at the same time. Also, in a case in which the amount of the compound represented by Formula 1 is 5.0 wt% or less, since mobility of ions in the battery may be improved while preventing an increase in viscosity of the electrolyte solution due to the surplus compound and an increase in battery resistance may be effectively prevented by suppressing excessive formation of the film, degradation of capacity and cycle characteristics may be prevented.

Specifically, the compound represented by Formula 1 may be present in an amount of 0.01 wt% to 3.0 wt%, more particularly, 0.1 wt% to 3.0 wt% based on the total weight of the non-aqueous electrolyte solution.

**(4) Other Additives**

Also, the non-aqueous electrolyte solution of the present disclosure may further include additional other additives in order to prevent the occurrence of collapse of the negative electrode due to the decomposition of the non-aqueous electrolyte solution in a high power environment or to further improve low-temperature high rate discharge characteristics, high-temperature stability, overcharge prevention, and an effect of suppressing battery swelling at high temperature.

Examples of the other additives may be at least one selected from the group consisting of a cyclic carbonate-based compound, a halogen-substituted carbonate-based compound, a sultone-based compound, a sulfate-based compound, a sulfite-based compound, a phosphate-based compound, a phosphite-based compound, a borate-based compound, a benzene-based compound, an amine-based compound, a silane-based compound, and a lithium salt-based compound.

The cyclic carbonate-based compound may include vinylene carbonate (VC) or vinyl ethylene carbonate (VEC).

The halogen-substituted carbonate-based compound may include fluoroethylene carbonate (FEC).

The sultone-based compound, for example, may be at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sulfate-based compound, for example, may be ethylene sulfate (Esa), trimethylene sulfate (TMS), or methyl trimethylene sulfate (MTMS).

Examples of the sulfite-based compound may be ethylene sulfite and trimethylene sulfite.

The phosphate-based or phosphite-based compound, for example, may be at least one compound selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The borate-based compound may include tetraphenylborate, and lithium oxalyldifluoroborate (LiODFB) or lithium bis(oxalato)borate ($LiB(C_2O_4)_2$, LiBOB) which may form a film on the surface of the negative electrode.

The benzene-based compound may be fluorobenzene, the amine-based compound may be triethanolamine or ethylenediamine, and the silane-based compound may be tetravinylsilane.

The lithium salt-based compound is a compound different from the lithium salt included in the non-aqueous electrolyte solution, wherein the lithium salt-based compound may include $LiPO_2F_2$ or $LiBF_4$.

Among these other additives, in order to form a more robust SEI film on the surface of the negative electrode during an initial activation process, other additives with an excellent film-forming effect on the surface of the negative electrode, specifically, at least one selected from the group consisting of vinylene carbonate, vinylethylene carbonate, fluoroethylene carbonate (FEC), and lithium oxalyldifluoroborate (LiODFB) may be included.
Two or more compounds may be mixed and used as the other additives, and the other additives may be present in an amount of 0.01 wt% to 50 wt%, particularly 0.01 wt% to 10 wt%, and preferably 0.05 wt% to 5 wt% based on the total weight of the non-aqueous electrolyte solution. In a case in which the amount of the other additives is within the above range, it is desirable because the cycle characteristics may be improved, a side reaction of the battery due to excessive addition may be prevented, and residue or precipitation of unreacted material may be prevented.

## Lithium Secondary Battery

Also, another embodiment of the present disclosure provides a lithium secondary battery including a positive electrode; a negative electrode; a separator disposed between the positive electrode and the negative electrode; and the above-described non-aqueous electrolyte solution of the present disclosure.
After an electrode assembly, in which a positive electrode, a negative electrode, and a separator between the positive electrode and the negative electrode are sequentially stacked, is formed and accommodated in a battery case, the lithium secondary battery of the present disclosure may be prepared by injecting the non-aqueous electrolyte solution of the present disclosure.
The lithium secondary battery of the present disclosure may be prepared according to a conventional method known in the art and used, and a method of preparing the lithium secondary battery of the present disclosure specifically is the same as described below.

### (1) Positive Electrode

The positive electrode according to the present disclosure may include a positive electrode active material layer including a positive electrode active material, and, if necessary, the positive electrode active material layer may further include a conductive agent and/or a binder.
The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum.
Specifically, the positive electrode active material may include lithium-cobalt-based oxide (e.g., $LiCoO_2$, etc.), lithium-manganese-based oxide (e.g., $LiMnO_2$, $LiMn_2O_4$, etc.), lithium-nickel-based oxide (e.g., $LiNiO_2$, etc.), lithium-nickel-manganese-based oxide (e.g., $LiNi_{1-Y}MnyO_2$ (where 0<Y<1), $LiMn_{2-Z}Ni_zO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1), $LiMn_{2-Z1}Co_{z1}O_4$ (where 0<Z1<2), etc.), lithium-nickel-manganese-cobalt-based oxide (e.g., $Li(Ni_pCo_qMn_{r1})O_2$(where 0<p<1, 0<q<1, 0<r1<1, and p+q+r1=1) or $Li(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{S2})O_2$ (where M is selected from the group consisting of aluminum (Al), iron (Fe), vanadium (V), chromium (Cr), titanium (Ti), tantalum (Ta), magnesium (Mg), titanium (Ti), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.
Among these materials, in terms of the improvement of capacity characteristics and stability of the battery, the positive electrode active material may include at least one selected from the group consisting of lithium-cobalt oxide, lithium-manganese-based oxide, lithium-nickel-manganese-cobalt-based oxide, and lithium-nickel-cobalt-transition metal (M) oxide, and may specifically include at least one selected from a lithium-cobalt oxide, a lithium-nickel-manganese-cobalt-based oxide having a nickel content of 55 atm% or more and a lithium-nickel-cobalt-transition metal (M) oxide having a nickel content of 55 atm% or more.
Specifically, as a representative example, the positive electrode active material may include at least one selected from the group consisting of $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, and $Li(Ni_{0.86}Co_{0.05}Mn_{0.07}Al_{0.02})O_2$, and may preferably include $Li(Ni_{0.86}Co_{0.05}Mn_{0.07}Al_{0.02})O_2$.
The positive electrode active material may be included in an amount of 80 wt% to 99 wt%, for example, 90 wt% to 99 wt% based on a total weight of a solid content in a positive electrode slurry. In this case, when the amount of the positive electrode active material is 80 wt% or less, since energy density is reduced, capacity may be reduced.
The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite

with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be added in an amount of 1 wt% to 30 wt% based on a total weight of a solid content in the positive electrode active material layer.

The binder is a component that improves the adhesion between positive electrode active material particles and the adhesion between the positive electrode active material and a current collector, wherein the binder is commonly added in an amount of 1 wt% to 30 wt% based on the total weight of the solid content in the positive electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The positive electrode of the present disclosure as described above may be prepared according to a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent and then dried and rolled to form a positive electrode active material layer, or a method in which the positive electrode active material layer is cast on a separate support, and a film separated from the support is then laminated on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content in the active material slurry including the positive electrode active material as well as optionally the binder and the conductive agent is in a range of 10 wt% to 70 wt%, preferably, 20 wt% to 60 wt%.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \le x \le 1$), $Li_xWO_2$ ($0 \le x \le 1$), and $Sn_xMe_{1-x}Me'_yO_z$ (Me: manganese (Mn), Fe, Pb, or Ge; Me': Al, boron (B), phosphorus (P), Si, Groups I, II and III elements of the periodic table, or halogen; $0<x\le 1$; $1\le y\le 3$; $1\le z\le 8$) may be used as the metal composite oxide.

The material, which may be doped and undoped with lithium, may include Si, $SiO_x$ ($0<x<2$), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, scandium

(Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, P, arsenic (As), Sb, bismuth (Bi), sulfur (S), selenium (Se), tellurium (Te), polonium (Po), and a combination thereof.

The transition metal oxide may include lithium-containing titanium composite oxide (LTO), vanadium oxide, and lithium vanadium oxide.

The negative electrode active material may be included in an amount of 80 wt% to 99 wt% based on a total weight of a solid content in a negative electrode slurry.

The conductive agent is a component for further improving conductivity of the negative electrode active material, wherein the conductive agent may be added in an amount of 1 wt% to 20 wt% based on a total weight of a solid content in the negative electrode active material layer. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The binder is a component that assists in the binding between the conductive agent, the active material, and the current collector, wherein the binder is commonly added in an amount of 1 wt% to 30 wt% based on the total weight of the solid content in the negative electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The negative electrode may be prepared according to a method of preparing a negative electrode which is known in the art. For example, the negative electrode may be prepared by a method in which a negative electrode collector is coated with a negative electrode active material slurry, which is prepared by dissolving or dispersing the negative electrode active material as well as optionally the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector generally has a thickness of 3 μm to 500 μm. The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, or an aluminum-cadmium alloy may be used. Also, similar to the positive electrode collector, microscopic irregularities may be formed on the surface of the collector to improve the adhesion of the negative electrode active material, and the negative electrode collector may be used in various shapes such as that of a film, a sheet, a foil, a net, a porous body, a foam body, a non-woven fabric body, and the like.

The solvent may include water or an organic solvent, such as NMP and alcohol, and may be used in an amount such that desirable viscosity is obtained when the negative electrode active material as well as optionally the binder and the conductive agent is included. For example, the solvent may be included in an amount such that a concentration of the solid content in the active material slurry including the negative electrode active material as well as optionally the binder and the conductive agent is in a range of 50 wt% to 75 wt%, preferably, 50 wt% to 65 wt%.

**(3) Separator**

As the separator included in the lithium secondary battery of the present disclosure, a conventional porous polymer film commonly used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present disclosure is not limited thereto.

A shape of the lithium secondary battery of the present disclosure is not particularly limited, but a cylindrical type using a can, a prismatic type, a pouch type, or a coin type may be used.

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

**[Examples]**

**Example 1.**

(Non-aqueous Electrolyte Solution Preparation)

After $LiPF_6$ was dissolved in a non-aqueous organic solvent, in which ethylene carbonate (EC):propylene carbonate (PC):ethyl propionate (EP):propyl propionate (PP) were mixed in a volume ratio of 20:10:25:45, such that a concentration of the $LiPF_6$ was 1.0 M, a non-aqueous electrolyte solution for a lithium secondary battery was prepared by adding 0.5 wt% of the compound represented by Formula 1a (see Table 1 below).

(Lithium Secondary Battery Preparation)

A positive electrode active material ($LiNi_{0.8}Co_{0.1}Mn_{0.1}O_2$), a conductive agent (carbon black), and a binder (polyvinylidene fluoride) were added in a weight ratio of 97.5:1:1.5 to N-methyl-2-pyrrolidone (NMP) to prepare a positive electrode slurry (solid content: 50 wt%). A 12 μm thick aluminum (Al) thin film, as a positive electrode collector, was coated with the positive electrode slurry, dried, and then roll-pressed to prepare a positive electrode.

A negative electrode active material (artificial graphite), a binder (SBR-CMC), and a conductive agent (carbon black) were added to water, as a solvent, in a weight ratio of 95:3.5:1.5 to prepare a negative electrode slurry (solid content: 60 wt%). A 6 μm thick copper (Cu) thin film, as a negative electrode collector, was coated with the negative electrode slurry, dried, and then roll-pressed to prepare a negative electrode.

After an electrode assembly was prepared by sequentially stacking the positive electrode, a polyolefin-based porous separator coated with inorganic particles ($Al_2O_3$), and the negative electrode, the electrode assembly was accommodated in a pouch-type battery case, and the non-aqueous electrolyte solution for a lithium secondary battery was injected to prepare a pouch-type lithium secondary battery with an operating voltage of 4.45 V or more.

**Example 2.**

A non-aqueous electrolyte solution for a lithium secondary battery and a pouch-type lithium secondary battery including the same were prepared in the same manner as in Example 1 except that a non-aqueous electrolyte solution was prepared by adding the compound represented by Formula 1b, instead of the compound represented by Formula 1a, as an additive.

**Example 3.**

(Non-aqueous Electrolyte Solution Preparation)

After $LiPF_6$ was dissolved in a non-aqueous organic solvent, in which ethylene carbonate (EC):propylene carbonate (PC):ethyl propionate (EP):propyl propionate (PP) were mixed in a volume ratio of 20:10:25:45, such that a concentration of the $LiPF_6$ was 1.0 M, a non-aqueous electrolyte solution was prepared by adding 1.0 wt% of the compound represented by Formula 1a (see Table 1 below).

(Lithium Secondary Battery Preparation)

A pouch-type lithium secondary battery was prepared in the same manner as in Example 1 except that the above-prepared non-aqueous electrolyte solution for a lithium secondary battery was used instead of the non-aqueous electrolyte solution for a lithium secondary battery of Example 1.

**Example 4.**

(Non-aqueous Electrolyte Solution Preparation)

After $LiPF_6$ was dissolved in a non-aqueous organic solvent, in which ethylene carbonate (EC):propylene carbonate (PC):ethyl propionate (EP):propyl propionate (PP) were mixed in a volume ratio of 20:10:25:45, such that a concentration of the $LiPF_6$ was 1.0 M, a non-aqueous electrolyte solution was prepared by adding 3.0 wt% of the compound represented by Formula 1a (see Table 1 below).

(Lithium Secondary Battery Preparation)

A pouch-type lithium secondary battery was prepared in the same manner as in Example 1 except that the above-prepared non-aqueous electrolyte solution for a lithium secondary battery was used instead of the non-aqueous electrolyte solution for a lithium secondary battery of Example 1.

**Example 5.**

(Non-aqueous Electrolyte Solution Preparation)

After $LiPF_6$ was dissolved in a non-aqueous organic solvent, in which ethylene carbonate (EC):propylene carbonate (PC):ethyl propionate (EP):propyl propionate (PP) were mixed in a volume ratio of 20:10:25:45, such that a concentration of the $LiPF_6$ was 1.0 M, a non-aqueous electrolyte solution was prepared by adding 0.01 wt% of the compound represented by Formula 1a (see Table 1 below).

(Lithium Secondary Battery Preparation)

A pouch-type lithium secondary battery was prepared in the same manner as in Example 1 except that the above-prepared non-aqueous electrolyte solution for a lithium secondary battery was used instead of the non-aqueous electrolyte solution for a lithium secondary battery of Example 1.

**Comparative Example 1.**

A pouch-type lithium secondary battery was prepared in the same manner as in Example 1 except that a non-aqueous electrolyte solution for a lithium secondary battery was prepared by dissolving $LiPF_6$ in a non-aqueous organic solvent, in which ethylene carbonate (EC):propylene carbonate (PC):ethyl propionate (EP):propyl propionate (PP) were mixed in a volume ratio of 20:10:25:45, such that a concentration of the $LiPF_6$ was 1.0 M.

**Comparative Example 2.**

A non-aqueous electrolyte solution for a lithium secondary battery and a pouch-type lithium secondary battery including the same were prepared in the same manner as in Example 1 except that a non-aqueous electrolyte solution was prepared by adding a compound represented by Formula 2 below (3-(Trifluoroacetyl)coumarin), instead of the compound represented by Formula 1a, as an additive.

[Formula 2]

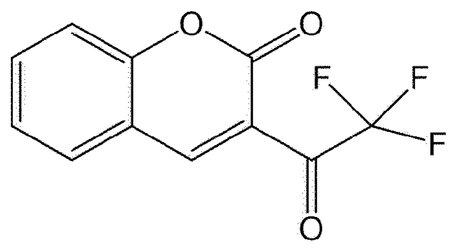

**Comparative Example 3.**

A non-aqueous electrolyte solution for a lithium secondary battery and a pouch-type lithium secondary battery including the same were prepared in the same manner as in Example 1 except that a non-aqueous electrolyte solution was prepared by adding a compound represented by Formula 3 below (7-Ethynylcoumarin), instead of the compound represented by Formula 1a, as an additive.

[Formula 3]

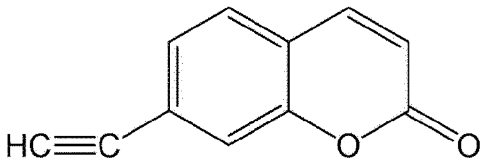

**Comparative Example 4.**

A non-aqueous electrolyte solution for a lithium secondary battery and a pouch-type lithium secondary battery including the same were prepared in the same manner as in Example 1 except that a non-aqueous electrolyte solution was prepared by adding coumarin (Cas No, 91-64-5, manufactured by Aldrich), instead of the compound represented by Formula 1a, as an additive.

[Table 1]

| | Additive | |
|---|---|---|
| | Formula | Amount of the additive in the non-aqueous electrolyte solution (%) |
| Example 1 | 1a | 0.5 |
| Example 2 | 1b | 0.5 |
| Example 3 | 1a | 1.0 |
| Example 4 | 1a | 3.0 |
| Example 5 | 1a | 0.01 |
| Comparative Example 1 | - | - |
| Comparative Example 2 | 2 | 0.5 |
| Comparative Example 3 | 3 | 0.5 |
| Comparative Example 4 | coumarin | 0.5 |

**[Experimental Examples]**

**Experimental Example 1. Initial Capacity Evaluation**

Each of the lithium secondary batteries prepared in Examples 1 and 2 and the secondary batteries prepared in Comparative Examples 1 to 4 was charged at 0.3 C rate to 4.2 V under a constant current-constant voltage (CC-CV) condition at room temperature (23°C) and discharged at 0.3 C rate to 2.5 V under a CC condition. Then, each lithium secondary battery was charged under a constant current/constant voltage (CC/CV) condition of 1 C/4.2 V until the current reached 1/20 (mA) of 1 C at room temperature (23°C), and then discharged again at a current of 1 C to 2.5 V to measure initial capacity. The results thereof are presented in Table 2 below.

**Experimental Example 2. High-temperature Cycle Evaluation**

Each of the lithium secondary batteries prepared in Examples 1 and 2 and the secondary batteries prepared in Comparative Examples 1 to 4, in which the initial capacities were measured in Experimental Example 1, was charged at 0.5 C rate to 4.2 V under a constant current/constant voltage (CC/CV) condition at 45°C until the current reached 1/20 (mA) of 1 C and then discharged again at a current of 0.5 C to 2.5 V. The above charging and discharging were set as one cycle, and 200 cycles were repeated. Subsequently, a capacity retention was calculated using the following Equation 1, and the results thereof are presented in Table 2.

$$\text{Capacity retention (\%)} = (\text{discharge capacity after 200 cycles/initial discharge capacity}) \times 100 \qquad \text{[Equation 1]}$$

[Table 2]

| | Initial capacity (mAh) | Capacity after 200 cycles (mAh) | Capacity retention (%) |
|---|---|---|---|
| Example 1 | 3321.5 | 2727.3 | 82.1 |
| Example 2 | 3319.1 | 2650.1 | 79.8 |
| Comparative Example 1 | 3317.5 | 2120.7 | 63.9 |
| Comparative Example 2 | 3317.5 | 2510.3 | 75.6 |
| Comparative Example 3 | 3318.2 | 2499.7 | 75.3 |
| Comparative Example 4 | 3318.8 | 2486.5 | 74.9 |

Referring to Table 2, with respect to the lithium secondary batteries of Examples 1 and 2, it may be confirmed that both initial capacity and capacity retention after $200^{th}$ cycle charge and discharge were improved in comparison to those of the secondary batteries of Comparative Examples 1 to 4 having the same additive content.

**Experimental Example 3. High-temperature Storage Evaluation**

After each of the lithium secondary batteries prepared in Examples 1 to 4 and the secondary batteries prepared in Comparative Examples 1 to 4 was charged at 0.33 C rate to 4.2 V under a constant current/constant voltage condition at room temperature (25°C) to measure initial capacity and then stored at 60°C for 2 weeks, capacity retention after high-temperature storage of each lithium secondary battery was measured, and the change results were listed in Table 3 below.

[Table 3]

| | Initial capacity (mAh) | Capacity after 2 weeks of high-temperature storage (mAh) | Capacity retention (%) |
|---|---|---|---|
| Example 1 | 3218.7 | 2887.3 | 89.7 |
| Example 2 | 3217.5 | 2790.3 | 86.7 |
| Example 3 | 3316.8 | 2829.2 | 85.3 |
| Example 4 | 3289.9 | 2618.8 | 79.6 |
| Comparative Example 1 | 3219.5 | 2430.3 | 75.5 |
| Comparative Example 2 | 3317.9 | 2299.3 | 69.3 |
| Comparative Example 3 | 3318.5 | 2571.8 | 77.5 |
| Comparative Example 4 | 3319.4 | 2066.1 | 62.2 |

Referring to Table 3, with respect to the secondary batteries of Examples 1 to 4 including the additive of the present disclosure, it may be understood that capacity retentions after high-temperature storage were significantly improved in comparison to those of the secondary batteries of Comparative Examples 1 to 4.

**Experimental Example 4. High-rate Discharge Evaluation**

Each of the secondary battery of Example 5 and the secondary battery of Comparative Example 1, in which the initial capacities were measured in Experimental Example 1, was charged at a current of 1 C to 4.2 V under a constant current/constant voltage (CC/CV) condition at 25°C until the current reached 1/20 (mA) of 1 C and then discharged at 3 C rate to 2.5 V for 3 cycles to measure rate discharge capacity. A capacity retention was calculated using the following Equation 2, and the results thereof are presented in Table 4 below.

Capacity retention (%) = (3 C discharge capacity/initial discharge capacity) $\times$ 100 [Equation 2]

In Equation 2, the 3 C discharge capacity is a $3^{rd}$ discharge capacity value in 3 cycles, and the initial discharge capacity is a 0.3 C measured capacity value.

[Table 4]

| | Initial capacity (mAh) | 3 C discharge capacity (mAh) | Capacity retention (%) |
|---|---|---|---|
| Example 5 | 3321.1 | 2665.7 | 80.2 |
| Comparative Example 1 | 3317.5 | 2487.6 | 74.9 |

Referring to Table 4, with respect to the secondary battery of Example 5 including a small amount of the additive, it may be understood that capacity retention was improved in comparison to that of the secondary battery of Comparative Example 1 not including the additive.

## Claims

1. A non-aqueous electrolyte solution for a lithium secondary battery, the non-aqueous electrolyte solution comprising a lithium salt, an organic solvent, and a compound represented by Formula 1 as an additive.

[Formula 1]

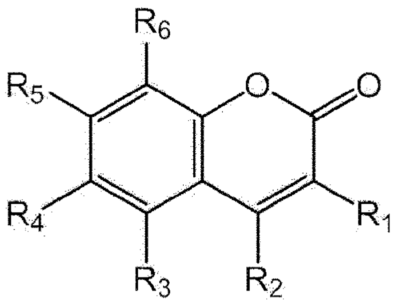

wherein, in Formula 1,
$R_1$ to $R_6$ are each independently hydrogen, an alkyl group having 1 to 5 carbon atoms, $-SiR_7R_8R_9$ where $R_7$ to $R_9$ are each independently an alkyl group having 1 to 10 carbon atoms, or $-O-SiR_{10}R_{11}R_{12}$ where $R_{10}$ to $R_{12}$ are each independently an alkyl group having 1 to 10 carbon atoms,
wherein at least one of $R_1$ to $R_5$ is $-SiR_7R_8R_9$ where $R_7$ to $R_9$ are each independently an alkyl group having 1 to 10 carbon atoms or $-O-SiR_{10}R_{11}R_{12}$ where $R_{10}$ to $R_{12}$ are each independently an alkyl group having 1 to 10 carbon atoms.

2. The non-aqueous electrolyte solution for a lithium secondary battery of claim 1, wherein, in Formula 1, $R_1$ to $R_6$ are each independently hydrogen, $-SiR_7R_8R_9$ where $R_7$ to $R_9$ are each independently an alkyl group having 1 to 7 carbon atoms, or $-O-SiR_{10}R_{11}R_{12}$ where $R_{10}$ to $R_{12}$ are each independently an alkyl group having 1 to 7 carbon atoms, wherein at least one of $R_1$ or $R_5$ is $-SiR_7R_8R_9$ where $R_7$ to $R_9$ are each independently an alkyl group having 1 to 7 carbon atoms or $-O-SiR_{10}R_{11}R_{12}$ w here $R_{10}$ to $R_{12}$ are each independently an alkyl group having 1 to 7 carbon atoms, and $R_2$ to $R_4$ and $R_6$ are each independently hydrogen or an alkyl group having 1 to 5 carbon atoms.

3. The non-aqueous electrolyte solution for a lithium secondary battery of claim 1, wherein, in Formula 1, $R_1$ to $R_6$ are each independently hydrogen, $-SiR_7R_8R_9$ wh ere $R_7$ to $R_9$ are each independently an alkyl group having 1 to 5 carbon atoms, or $-O-SiR_{10}R_{11}R_{12}$ where $R_{10}$ to $R_{12}$ are each independently an alkyl group having 1 to 5 carbon atoms, wherein at least one of $R_1$ or $R_5$ is $-SiR_7R_8R_9$ where $R_7$ to $R_9$ are each independently an alkyl group having 1 to 5 carbon atoms or $-O-SiR_{10}R_{11}R_{12}$ w here $R_{10}$ to $R_{12}$ are each independently an alkyl group having 1 to 5 carbon atoms, and $R_2$ to $R_4$ and $R_6$ are each independently hydrogen or an alkyl group having 1 to 5 carbon atoms.

4. The non-aqueous electrolyte solution for a lithium secondary battery of claim 1, wherein the compound represented by Formula 1 comprises at least one selected from compounds represented by Formulae 1a and 1b.

[Formula 1a]

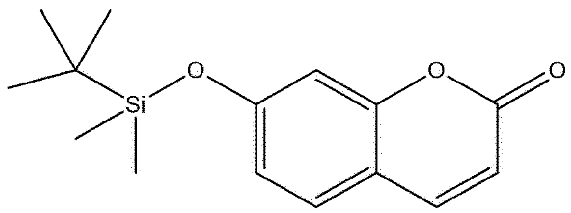

[Formula 1b]

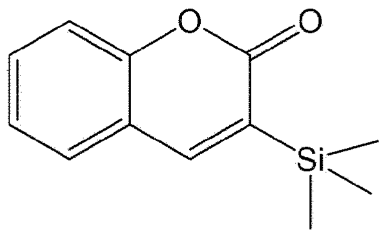

5. The non-aqueous electrolyte solution for a lithium secondary battery of claim 1, wherein the compound represented by Formula 1 is present in an amount of 0.01 wt% to 5.0 wt% based on a total weight of the non-aqueous electrolyte solution.

6. The non-aqueous electrolyte solution for a lithium secondary battery of claim 5, wherein the compound represented by Formula 1 is present in an amount of 0.01 wt% to 3.0 wt% based on the total weight of the non-aqueous electrolyte solution.

7. The non-aqueous electrolyte solution for a lithium secondary battery of claim 1, wherein the organic solvent comprises at least one selected from a cyclic carbonate-based organic solvent, a linear carbonate-based organic solvent, and a linear ester-based organic solvent.

8. The non-aqueous electrolyte solution for a lithium secondary battery of claim 1, further comprising at least one other additive selected from the group consisting of a cyclic carbonate-based compound, a halogen-substituted carbonate-based compound, a sultone-based compound, a sulfate-based compound, a sulfite-based compound, a phosphate-based compound, a phosphite-based compound, a borate-based compound, a benzene-based compound, an amine-based compound, a silane-based compound, and a lithium salt-based compound.

9. A lithium secondary battery comprising a negative electrode, a positive electrode, a separator disposed between the negative electrode and the positive electrode, and a non-aqueous electrolyte solution,
wherein the non-aqueous electrolyte solution comprises the non-aqueous electrolyte solution for a lithium secondary battery of claim 1.

## Patentansprüche

1. Nichtwässrige Elektrolytlösung für eine Lithiumsekundärbatterie, wobei die nichtwässrige Elektrolytlösung ein Lithiumsalz, ein organisches Lösungsmittel und eine durch die Formel 1 dargestellte Verbindung als Additiv umfasst.

[Formel 1]

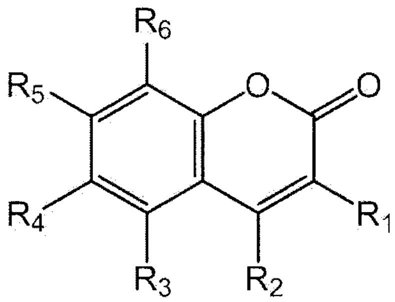

worin, in Formel 1,
$R_1$ bis $R_6$ jeweils unabhängig Wasserstoff, eine Alkylgruppe mit 1 bis 5 Kohlenstoffatomen, $-SiR_7R_8R_9$, wobei $R_7$ bis $R_9$ jeweils unabhängig eine Alkylgruppe mit 1 bis 10 Kohlenstoffatomen sind, oder $-O-SiR_{10}R_{11}R_{12}$ sind, wobei $R_{10}$ bis $R_{12}$ jeweils unabhängig eine Alkylgruppe mit 1 bis 10 Kohlenstoffatomen sind,
worin mindestens eines von $R_1$ bis $R_5$ $-SiR_7R_8R_9$, wobei $R_7$ bis $R_9$ jeweils unabhängig eine Alkylgruppe mit 1 bis 10 Kohlenstoffatomen sind, oder $-O-SiR_{10}R_{11}R_{12}$ ist, wobei $R_{10}$ bis $R_{12}$ jeweils unabhängig eine Alkylgruppe mit 1 bis 10 Kohlenstoffatomen sind.

2. Nichtwässrige Elektrolytlösung für eine Lithiumsekundärbatterie gemäß Anspruch 1, worin, in Formel 1, $R_1$ bis $R_6$ jeweils unabhängig Wasserstoff, $-SiR_7R_8R_9$, wobei $R_7$ bis $R_9$ jeweils unabhängig eine Alkylgruppe mit 1 bis 7 Kohlenstoffatomen sind, oder $-O-SiR_{10}R_{11}R_{12}$ sind, wobei $R_{10}$ bis $R_{12}$ jeweils unabhängig eine Alkylgruppe mit 1 bis 7 Kohlenstoffatomen sind, worin mindestens eines von $R_1$ oder $R_5$ $-SiR_7R_8R_9$, wobei $R_7$ bis $R_9$ jeweils unabhängig eine Alkylgruppe mit 1 bis 7 Kohlenstoffatomen sind, oder $-O-SiR_{10}R_{11}R_{12}$ ist, wobei $R_{10}$ bis $R_{12}$ jeweils unabhängig eine Alkylgruppe mit 1 bis 7 Kohlenstoffatomen sind, und $R_2$ bis $R_4$ und $R_6$ jeweils unabhängig Wasserstoff oder eine Alkylgruppe mit 1 bis 5 Kohlenstoffatomen sind.

3. Nichtwässrige Elektrolytlösung für eine Lithiumsekundärbatterie gemäß Anspruch 1, worin, in Formel 1, $R_1$ bis $R_6$ jeweils unabhängig Wasserstoff, $-SiR_7R_8R_9$, wobei $R_7$ bis $R_9$ jeweils unabhängig eine Alkylgruppe mit 1 bis 5 Kohlenstoffatomen sind, oder $-O-SiR_{10}R_{11}R_{12}$ sind, wobei $R_{10}$ bis $R_{12}$ jeweils unabhängig eine Alkylgruppe mit 1 bis 5 Kohlenstoffatomen sind, worin mindestens eines von $R_1$ oder $R_5$ $-SiR_7R_8R_9$, wobei $R_7$ bis $R_9$ jeweils unabhängig eine Alkylgruppe mit 1 bis 5 Kohlenstoffatomen sind, oder $-O-SiR_{10}R_{11}R_{12}$ ist, wobei $R_{10}$ bis $R_{12}$ jeweils unabhängig eine Alkylgruppe mit 1 bis 5 Kohlenstoffatomen sind, und $R_2$ bis $R_4$ und $R_6$ jeweils unabhängig Wasserstoff oder eine Alkylgruppe mit 1 bis 5 Kohlenstoffatomen sind.

4. Nichtwässrige Elektrolytlösung für eine Lithiumsekundärbatterie gemäß Anspruch 1, worin die durch die Formel 1 dargestellte Verbindung mindestens eines umfasst, ausgewählt aus durch Formel 1a und 1b dargestellten Verbindungen.

[Formel 1a]

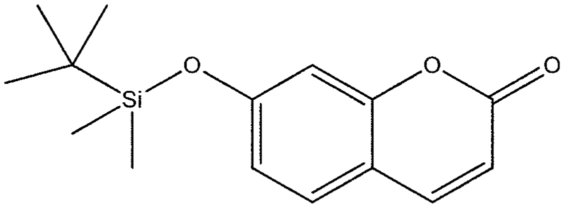

[Formel 1b]

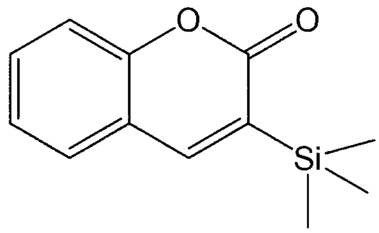

5. Nichtwässrige Elektrolytlösung für eine Lithiumsekundärbatterie gemäß Anspruch 1, worin die durch die Formel 1 dargestellte Verbindung in einer Menge von 0,01 Gew.-% bis 5,0 Gew.-%, basierend auf dem Gesamtgewicht der nichtwässrigen Elektrolytlösung, vorhanden ist.

6. Nichtwässrige Elektrolytlösung für eine Lithiumsekundärbatterie gemäß Anspruch 5, worin die durch die Formel 1 dargestellte Verbindung in einer Menge von 0,01 Gew.-% bis 3,0 Gew.-%, basierend auf dem Gesamtgewicht der nichtwässrigen Elektrolytlösung, vorhanden ist.

7. Nichtwässrige Elektrolytlösung für eine Lithiumsekundärbatterie gemäß Anspruch 1, worin das organische Lösungsmittel mindestens eines umfasst, ausgewählt aus einem organischen Lösungsmittel auf Basis von cyclischem Carbonat, einem organischen Lösungsmittel auf Basis von linearem Carbonat und einem organischen Lösungsmittel auf Basis von linearem Ester.

8. Nichtwässrige Elektrolytlösung für eine Lithiumsekundärbatterie gemäß Anspruch 1, ferner umfassend mindestens ein anderes Additiv, ausgewählt aus der Gruppe, bestehend aus einer Verbindung auf Basis von cyclischem Carbonat, einer Halogen-substituierten Verbindung auf Basis von Carbonat, einer Verbindung auf Basis von Sulton, einer Verbindung auf Basis von Sulfat, einer Verbindung auf Basis von Sulfit, einer Verbindung auf Basis von Phosphat, einer Verbindung auf Basis von Phosphit, einer Verbindung auf Basis von Borat, einer Verbindung auf Basis von Benzol, einer Verbindung auf Basis von Amin, einer Verbindung auf Basis von Silan und einer Verbindung auf Basis von Lithiumsalz.

9. Lithiumsekundärbatterie, umfassend eine negative Elektrode, eine positive Elektrode, einen zwischen der negativen Elektrode und der positiven Elektrode angeordneten Separator und eine nichtwässrige Elektrolytlösung,
worin die nichtwässrige Elektrolytlösung die nichtwässrige Elektrolytlösung für eine Lithiumsekundärbatterie gemäß Anspruch 1 umfasst.

**Revendications**

1. Solution électrolytique non-aqueuse pour une batterie secondaire au lithium, la solution électrolytique non-aqueuse comprenant un sel de lithium, un solvant organique et un composé représenté par la formule 1 en tant qu'additif.

[Formule 1]

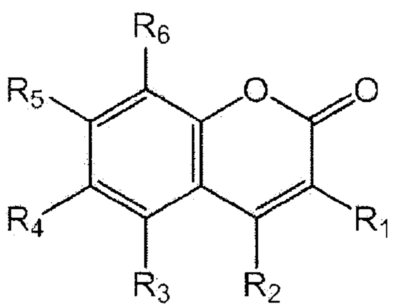

dans lequel, dans la Formule 1,
$R_1$ à $R_6$ sont chacun indépendamment l'hydrogène, un groupe alkyle présentant 1 à 5 atomes de carbone, $-SiR_7R_8R_9$, où $R_7$ à $R_9$ sont chacun indépendamment un groupe alkyle présentant 1 à 10 atomes de carbone, ou $-O-SiR_{10}R_{11}R_{12}$, où $R_{10}$ à $R_{12}$ sont chacun indépendamment un groupe alkyle présentant 1 à 10 atomes de carbone,

dans laquelle au moins un parmi $R_1$ à $R_5$ est -Si$R_7R_8R_9$, où $R_7$ à $R_9$ sont chacun indépendamment un groupe alkyle présentant 1 à 10 atomes de carbone, ou -O-Si$R_{10}R_{11}R_{12}$, où $R_{10}$ à $R_{12}$ sont chacun indépendamment un groupe alkyle présentant 1 à 10 atomes de carbone.

2. Solution électrolytique non-aqueuse pour une batterie secondaire au lithium selon la revendication 1, dans laquelle, dans la formule 1, $R_1$ à $R_6$ sont chacun indépendamment l'hydrogène, -Si$R_7R_8R_9$, où $R_7$ à $R_9$ sont chacun indépendamment un groupe alkyle présentant 1 à 7 atomes de carbone, ou -O-Si$R_{10}R_{11}R_{12}$, où $R_{10}$ à $R_{12}$ sont chacun indépendamment un groupe alkyle présentant 1 à 7 atomes de carbone, dans laquelle au moins un parmi $R_1$ et $R_5$ est -Si$R_7R_8R_9$, où $R_7$ à $R_9$ sont chacun indépendamment un groupe alkyle présentant 1 à 7 atomes de carbone, ou -O-Si$R_{10}R_{11}R_{12}$, où $R_{10}$ à $R_{12}$ sont chacun indépendamment un groupe alkyle présentant 1 à 7 atomes de carbone, et $R_2$ à $R_4$ et $R_6$ sont chacun indépendamment l'hydrogène ou un groupe alkyle présentant 1 à 5 atomes de carbone.

3. Solution électrolytique non-aqueuse pour une batterie secondaire au lithium selon la revendication 1, dans laquelle, dans la formule 1, $R_1$ à $R_6$ sont chacun indépendamment l'hydrogène, -Si$R_7R_8R_9$, où $R_7$ à $R_9$ sont chacun indépendamment un groupe alkyle présentant 1 à 5 atomes de carbone, ou -O-Si$R_{10}R_{11}R_{12}$, où $R_{10}$ à $R_{12}$ sont chacun indépendamment un groupe alkyle présentant 1 à 5 atomes de carbone, dans laquelle au moins un parmi $R_1$ et $R_5$ est -Si$R_7R_8R_9$, où $R_7$ à $R_9$ sont chacun indépendamment un groupe alkyle présentant 1 à 5 atomes de carbone ou -O-Si$R_{10}R_{11}R_{12}$, où $R_{10}$ à $R_{12}$ sont chacun indépendamment un groupe alkyle présentant 1 à 5 atomes de carbone, et $R_2$ à $R_4$ et $R_6$ sont chacun indépendamment l'hydrogène ou un groupe alkyle présentant 1 à 5 atomes de carbone.

4. Solution électrolytique non-aqueuse pour une batterie secondaire au lithium selon la revendication 1, dans laquelle le composé représenté par la Formule 1 comprend au moins un, choisi, parmi des composés représentés par les Formules 1a et 1b.

[Formule 1a]

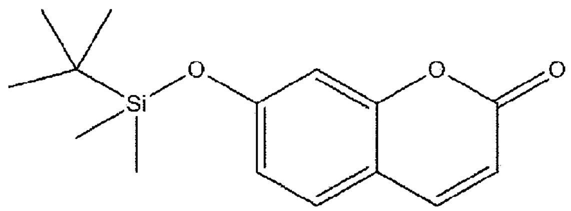

[Formule 1b]

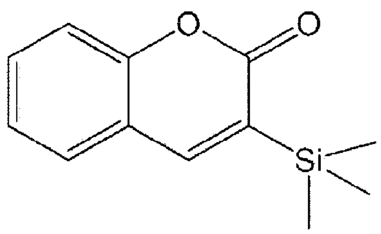

5. Solution électrolytique non-aqueuse pour une batterie secondaire au lithium selon la revendication 1, dans laquelle le composé représenté par la Formule 1 est présent en une quantité allant de 0,01 % en poids à 5,0 % en poids par rapport un poids total de la solution électrolytique non-aqueuse.

6. Solution électrolytique non-aqueuse pour une batterie secondaire au lithium selon la revendication 5, dans laquelle le composé représenté par la Formule 1 est présent en une quantité allant de 0,01 % en poids à 3,0 % en poids par rapport au poids total de la solution électrolytique non-aqueuse.

7. Solution électrolytique non-aqueuse pour une batterie secondaire au lithium selon la revendication 1, dans laquelle le solvant organique comprend au moins un, choisi, parmi un solvant organique à base de carbonate cyclique, un solvant organique à base de carbonate linéaire et un solvant organique à base d'ester linéaire.

8. Solution électrolytique non-aqueuse pour une batterie secondaire au lithium selon la revendication 1, comprenant en

outre au moins un autre additif choisi dans le groupe consistant en un composé à base de carbonate cyclique, un composé à base de carbonate substitué par un halogène, un composé à base de sultone, un composé à base de sulfate, un composé à base de sulfite, un composé à base de phosphate, un composé à base de phosphite, un composé à base de borate, un composé à base de benzène, un composé à base d'amine, un composé à base de silane et un composé à base de sel de lithium.

**9.** Batterie secondaire au lithium comprenant une électrode négative, une électrode positive, un séparateur disposé entre l'électrode négative et l'électrode positive, et une solution électrolytique non-aqueuse,
dans laquelle la solution d'électrolyte non-aqueuse comprend la solution d'électrolyte non-aqueuse pour une batterie secondaire au lithium selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210169690
- KR 1020220161914
- KR 20210060330 A